# NEUE EUROPÄISCHE PATENTSCHRIFT

(11) **EP 1 508 692 B2**
(45) Veröffentlichungstag und Bekanntmachung des Hinweises auf die Entscheidung über den Einspruch: **04.05.2016**
(45) Hinweis auf die Patenterteilung: 27.09.2006
(21) Anmeldenummer: 04018803.9
(22) Anmeldetag: 07.08.2004
(51) Int. Cl.: F03D 1/00, F03D 80/00

(54) **Windenergiekonverter mit einer einen Innenraum aufweisenden Rotornabe**
Wind energy converter with a hub having an internal compartment
Convertisseur d'énergie éolienne avec un moyeu de rotor comportant un compartiment interne

(30) Priorität: 14.08.2003 DE 10337534; 18.02.2004 DE 102004007763; 06.03.2004 DE 202004003522 U
(43) Veröffentlichungstag der Anmeldung: 23.02.2005
(73) Patentinhaber: W2E Wind to Energy GmbH, 18055 Rostock (DE)
(72) Erfinder: Konrad Grever, 49326 Melle (DE); Reinhard Grever, 49326 Melle (DE)
(74) Vertreter: Siekmann, Gunnar

(56) Entgegenhaltungen:
- EP-A- 1 375 913
- DE-A- 19 644 355
- DE-A- 19 802 574

## Beschreibung

Die Erfindung betrifft einen Windenergiekonverter nach dem Oberbegriff des Anspruchs 1.

Die Rotornabe ist Teil des Rotors und trägt ein oder mehrere Rotorblätter. Um eine Eisbildung auf den Rotorblättern zu verhindern, ist es insbesondere bei großen Windenergiekonvertern bekannt, sie mit einer Rotorblattbeheizung auszurüsten.

Die Offenlegungsschrift DE 196 44 355 zeigt einen Windenergiekonverter, mit dem die im Gondelkopf anfallende Generator- bzw. Getriebeabwärme genutzt werden kann. Dazu weist der Strömungskanal eine den Triebstrang umgebende Ringkammer auf, über die der Innenraum der Rotornabe vom Inneren des Gondelkopfes aus mit erwärmter Luft versorgt werden kann. Hier besteht jedoch ein Problem in der Realisierung einerVerschleiß- und leckagearmen Abdichtung zwischen einer statorseitig und einer rotorseitig angeordneten Kammerhälfte.

Insbesondere bei großen Windenergiekonvertern ist es weiterhin bekannt, daß Befestigungselemente und Verstellmechanismen der Rotorblätter vom Innenraum der Rotornabe aus zugänglich sind, wobei der Innenraum der Rotornabe nicht vom Gondelkopf aus versorgt bzw. erreicht werden kann, da der Triebstrang als Vollwelle aus dem Gondelkopf heraustritt.

Bei den bekannten Windenergiekonvertern weist die Rotornabe deshalb wenigstens eine Einsteigeöffnung auf, die nur von außen, beispielsweise mittels Kranauslegern oder Leiterelementen erreichbar ist. Aufgrund der großen Turmhöhen bergen derartige Unterfangen jedoch erhöhte Unfallrisiken.

Der Erfindung liegt daher die Aufgabe zugrunde, einen Windenergiekonverter der eingangs beschriebenen Gattung aufzuzeigen, mit dem der Innenraum der Rotornabe vom Inneren des Gondelkopfes aus besonders einfach versorgt werden kann.

Diese Aufgabe ist erfindungsgemäß durch einen Windenergiekonverter mit den Merkmalen des Patentanspruches 1 gelöst.

Der erfindungsgemäße Windenergiekonverter zeichnet sich dadurch aus, daß der Durchgang durch den Innenring des Rotorlagers hindurchgeführt ist. Mit einer derartigen Ausbildung kann der Innenraum der Rotornabe auf besonders effiziente Weise vom Inneren des Gondelkopfes aus versorgt werden. Umständliche Wege, das Rotorlager vom Inneren des Gondelkopfes aus peripher zu umgehen oder die Rotornabe außenseitig mit Einsteigeöffnungen zu versehen, können vorteilhaft entfallen.

Erfindungsgemäß weist der Durchgang wenigstens eine in den Innenraum der Rotornabe einmündende Ausgangsöffnung auf, die vom Innenring des Rotorlagers ausgebildet ist. Es ist jedoch ebenso denkbar, daß der Durchgang mehrere rotationssymmetrisch im Innenring verteilt angeordnete Ausgangsöffnungen aufweist.

Auf dem der Ausgangsöffnung gegenüberliegenden Ende weist der Durchgang wenigstens eine in das Innere des Gondelkopfes einmündende Eingangsöffnung auf. Diese ist in einem Kupplungsrad angeordnet, das in den Triebstrang im Bereich des Innenringes eingesetzt ist. Vornehmlich weist das etwa scheibenartig ausgebildete Kupplungsrad jedoch mehrere, insbesondere drei Eingangsöffnungen auf, die rotationssymmetrisch im Radkörper des Kupplungsrades verteilt angeordnet sind. Bei mehreren Eingangsöffnungen ist der Radkörper mit Vorteil auf schmale, die Eingangsöffnungen begrenzende Stege oder Speichen reduziert.

Nach einer nächsten Weiterbildung der Erfindung, wird vorgeschlagen, das Kupplungsrad von einem scheibenartig ausgebildeten Bauteil auf ein teller-, topf- bzw. schüsselartig ausgebildetes Bauteil zu erweitern, so daß die Eingangsöffnung dann räumlich von der vom Innenring des Rotorlagers geschaffenen Ausgangsöffnung abrückt bzw. in das Innere des Gondelkopfes hineinrückt.

Das Kupplungsrad ist erfindungsgemäß über den Innenring des Rotorlagers mit der Rotornabe verbunden, so daß der Innenring ein Bindeglied zwischen dem Kupplungsrad und der Rotornabe ausbildet. Alternativ dazu wird vorgeschlagen, daß das Kupplungsrad ein Teilabschnitt der Rotornabe ist. Bei einer derartigen Ausbildung sitzt das Rotorlager mit seinem Innenring auf der Peripherie der Rotornabe, wobei der das Kupplungsrad ausbildende Teilabschnitt durch den Innenring des Rotorlagers hindurch in das Innere des Gondelkopfes hineinsteht oder zumindest an dieses ansteht.

Nach einer anderen Weiterbildung der Erfindung weist das Kupplungsrad wenigstens ein Arretierlager zum mechanischen Arretieren des gesamten Triebstranges auf. Da der Durchmesser des Kupplungsrades etwa die Größe des Durchmessers des Innenringes aufweist, sind die zum Arretieren des Triebstranges vom Arretierlager aufzunehmenden Blockierkräfte vorteilhaft klein. Das Arretierlager ist bevorzugt als wenigstens ein in dem Radkörper des Kupplungsrades angeordneter Durchbruch oder Ausbruch ausgebildet, in den ein Riegelorgan einschiebbar ist, welches sich am Maschinenträger abstützt.

Nach einer weiteren Weiterbildung der Erfindung ist dem Kupplungsrad wenigstens eine elastische Kupplung vorgeschaltet. Mit dem Kupplungsrad ist eine besonders effektive Schwingungsentkoppelung zwischen dem Rotor und dem Getriebe realisiert, so daß die Betriebsgeräusche bei dem erfindungsgemäßen Windenergiekonverter deutlich reduziert sind.

Weiterhin ist der Durchgang mit derartigen Abmessungen ausgebildet daß er von wenigstens einer Person passierbar ist. Mit einer derartigen Ausbildung ist ein Windenergiekonverter geschaffen, bei dem der Innenraum der Rotornabe über das Kupplungsrad vom Inneren des Gondelkopfes aus für wenigstens eine Person erreichbar bzw. zugänglich ist. Auf eine schwieriger erreichbare, an der Außenseite der Rotomabe angeordnete Einsteigeöffnung kann somit verzichtet werden.

Die elastische Kupplung ist als Elastomerkupplung mit wenigstens einem elastischen Übertragungselement ausgebildet. Elastomerkupplungen weisen Verdrehwinkelunter 5° aufund sind für den hier vorliegenden Anwendungsfall besonders geeignet. Es ist bevorzugt vorgesehen, daß die elastische Kupplung eine Bolzenkupplung mit ihren Bolzen zugeordneten Elastomerhülsen ist. Der Einsatz anderer Elastomerkupplungen ist hier jedoch ebenso denkbar.

Es ist besonders günstig, wenn der Antriebsstrang an der Stelle der Schwingungsentkopplung einen möglichst großen Durchmesser aufweist. Dazu ist das Kupplungsrad über die Bolzen der Bolzenkupplung mit wenigstens einem Reduzierstück verbunden, mit dem der Nabendurchmesser des Kupplungsrades auf den Durchmesser einer Getriebeeingangswelle reduziert ist. Das Reduzierstück und die Getriebeeingangswelle sind bevorzugt mittels Paßfeder-, Paßstift-oder Schrumpfverbindung miteinander verbunden, wobei die Paßfederverbindung eine Mehrzahl längs zur Rotationsachse des Triebstranges angeordnete Stiftfedern aufweist. Mit einer derartigen Ausbildung des Reduzierstückes baut der erfindungsgemäße Triebstrang besonders kurz, so daß konstruktive Maßnahmen zur Schaffung des im Inneren des Gondelkopfes erforderlichen Platzbedarfs, der zum Beschicken der Eingangsöffnung mit erwärmter Luft erforderlich ist, maßgeblich vereinfacht sind.

Ein Ausführungsbeispiel der Erfindung aus dem sich weitere konstruktive Merkmale ergeben, ist in der Zeichnung dargestellt. Es zeigen:
- Fig. 1: eine perspektivische Teilansicht des Gondelkopfes eines erfindungsgemäßen Windenergiekonverters mit geschnitten dargestelltem Maschinenträger in einem ersten Ausführungsbeispiel,
- Fig. 2: eine Seitenansicht des Gondelkopfes eines erfindungsgemäßen Windenergiekonverters mit geschnitten dargestelltem Maschinenträger in einem zweiten Ausführungsbeispiel,
- Fig. 3: eine Explosionsdarstellung des in Fig. 2 dargestellten Gondelkopfes, und
- Fig. 4: eine vergrößerte Teilansicht des in Fig. 3 dargestellten Gondelkopfes.

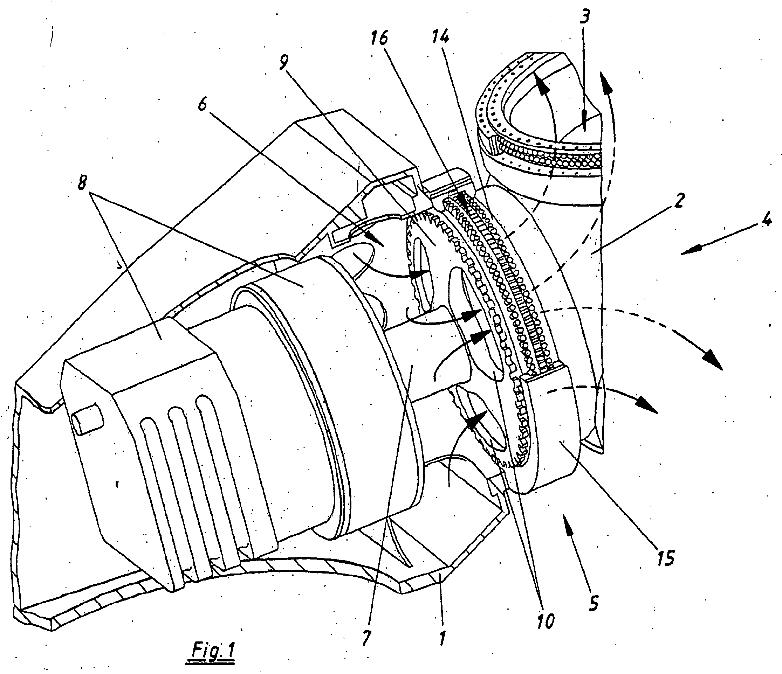

Die Fig. 1 zeigt eine perspektivische Teilansicht des Gondelkopfes eines erfindungsgemäßen Windenergiekonverters mit geschnitten dargestelltem Maschinenträger 1 in einem ersten Ausführungsbeispiel. Dem Gondelkopf ist eine Rotornabe 2 mit einem Innenraum 3 vorgelagert. Der Triebstrang 4 der Rotornabe 2 ist am Eintritt in den Gondelkopf über ein Rotorlager 5 am Maschinenträger 1 abgestützt, wobei das Innere 6 des Gondelkopfes und der Innenraum 3 der Rotornabe 2 über wenigstens einen Durchgang miteinander verbunden sind. Der Durchgang fungiert als Strömungskanal, wobei die Pfeile die im Durchgang vorherrschende Strömungsrichtung angeben. Im Inneren 6 des Gondelkopfes ist der Triebstrang 4 mit einer Getriebeeingangswelle 7 eines Getriebes 8 verbunden.

Erfindungsgemäß ist der Durchgang durch den Innenring des Rotorlagers 5 hindurchgeführt. Dazu weist der Durchgang eine in den Innenraum 3 der Rotornabe 2 einmündende Ausgangsöffnung auf, die vom Innenring 14 des Rotorlagers 5 ausgebildet wird. Auf dem der Ausgangsöffnung gegenüberliegenden Ende weist der Durchgang drei in das Innere 6 des Gondelkopfes einmündende Eingangsöffnungen 10 auf. Diese sind in einem Kupplungsrad 9 angeordnet, das in den Triebstrang 4 im Bereich des Innenringes 14 eingesetzt ist. Das einen etwa scheibenartig ausgebildeten Radkörper aufweisende Kupplungsrad 9 ist über den Innenring des Rotorlagers 5 mit der Rotornabe 2 verbunden.

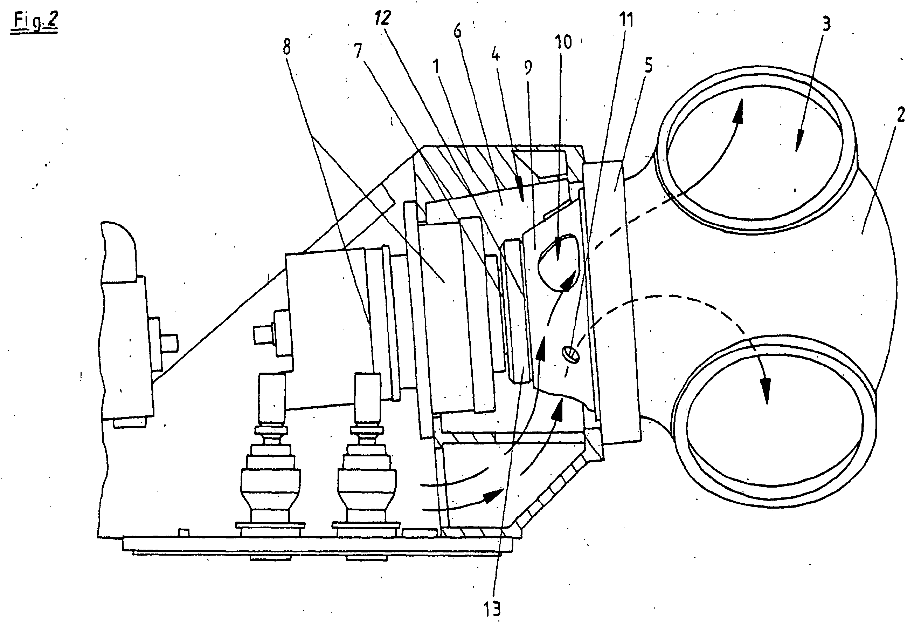

Die Fig. 2 zeigt eine Seitenansicht des Gondelkopfes eines erfindungsgemäßen Windenergiekonverters mit geschnitten dargestelltem Maschinenträger 1 in einem zweiten Ausführungsbeispiel. Dem Gondelkopf ist ebenfalls eine Rotornabe 2 mit einem Innenraum 3 vorgelagert. Der Triebstrang 4 der Rotornabe 2 ist am Eintritt in den Gondelkopf über ein Rotorlager 5 am Maschinenträger 1 abgestützt, wobei auch hier das Innere 6 des Gondelkopfes und der Innenraum 3 der Rotornabe 2 über wenigstens einen Durchgang miteinander verbunden sind. Im Inneren 6 des Gondelkopfes ist der Triebstrang 4 mit einer Getriebeeingangswelle 7 eines Getriebes 8 verbunden. Das einen etwa schlüsselartig erweiterten Radkörper aufweisende Kupplungsrad 9 ist über den Innenring des Rotorlagers 5 mit der Rotomabe 2 verbunden und weist ein Arretierlager 11 zum mechanischen Arriteren des gesamten Triebstranges 4 auf. Zwischen dem Kupplungsrad 9 und der Getriebeeingangswelle 7 ist eine elastische Kupplung 12 mit einem Reduzierstück 13 angeordnet, mit dem der Nabendurchmesser des Kupplungsrades 9 auf den Durchmesser der Getriebeeingangswelle 7 reduziert ist.

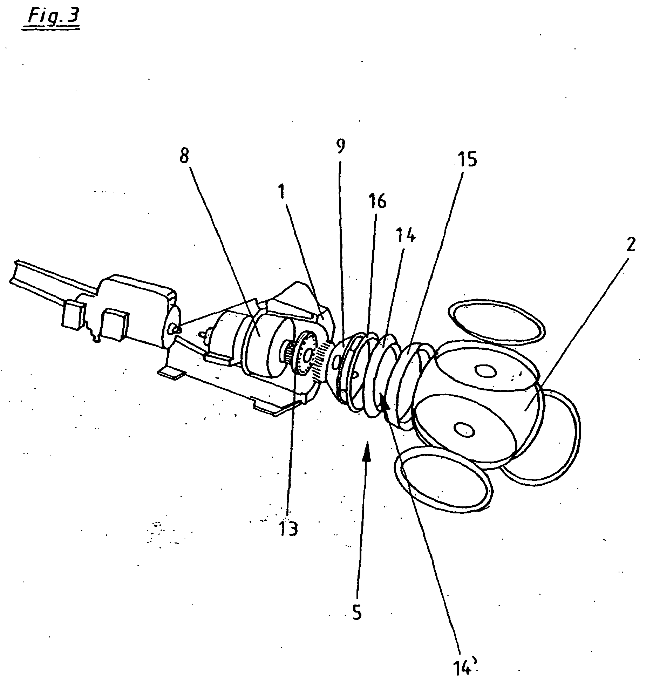

Die Fig. 3 zeigt eine Explosionsdarstellung des in Fig. 2 dargestellten Gondelkopfes. Das Rotorlager 5 weist einen Innenring 14, einen Außenring 15 und Wälzkörper 16 auf. Aus der Fig. 3 ist erkennbar, daß das Kupplungsrad 9 über den die Ausgangsöffnung 14' ausbildenden Innenring 14 mit der Rotornabe 2 verbunden ist. Der Außenring 15 des Rotorlagers 5 stützt sich am geschnitten dargestellten Maschinenträger 1 ab. Gleiche Bauteile sind mit gleichen Bezugszahlen versehen.

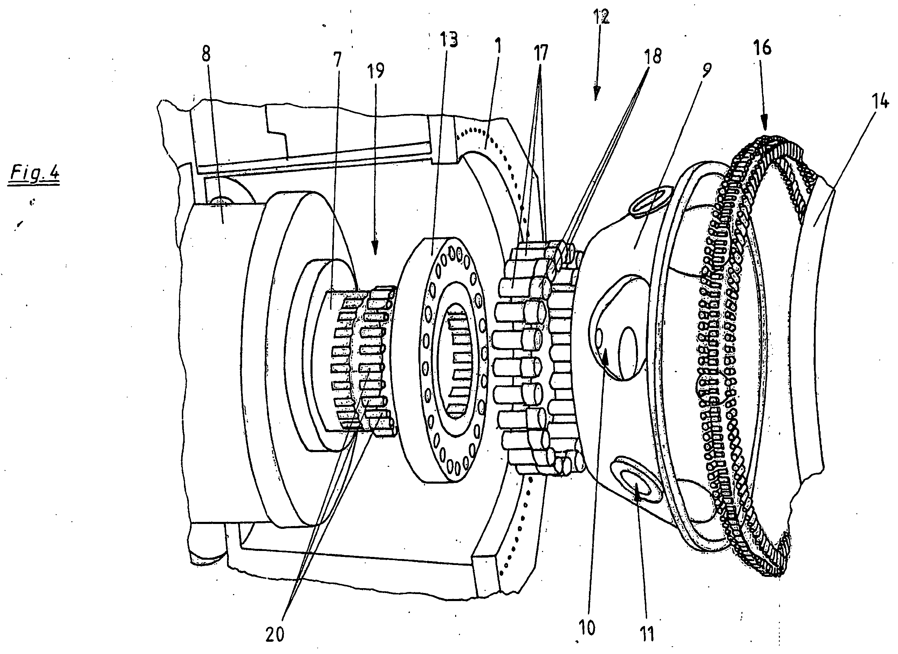

Die Fig. 4 zeigt eine vergrößerte Teilansicht des in Fig. 3 dargestellten Gondelkopfes, aus der erkennbar ist, daß die elastische Kupplung 12 eine Bolzenkupplung mit ihren Bolzen 17 zugeordneten Elastomerhülsen 18 ist. In montiertem Zustand ist das als schüsselartiges Hohlteil ausgebildete Kupplungsrad 9 über die die Bolzenkupplung ausbildenden Bolzen 17 mit dem Reduzierstück 13 verbunden. Das Reduzierstück 13 und die Getriebeeingangswelle 7 sind mittels Paßfederverbindung 19 miteinander verbunden, die eine Vielzahl längs zur Rotationsachse des Triebstranges 4 angeordnete Stiftfedern 20 aufweist. Gleiche Bauteile sind mit gleichen Bezugszahlen versehen.

## Patentansprüche

1. Windenergiekonverter mit einem einen Maschinenträger aufweisenden Gondelkopf, dem eine wenigstens einen Innenraum aufweisende Rotornabe (2) vorgelagert ist, deren Triebstrang (4) am Eintritt in den Gondelkopf über wenigstens ein Rotorlager (5) mit einem Innenring (14) und einem Außenring (15) am Maschinenträger (1) abgestützt ist und im Inneren (6) des Gondelkopfes mit einer Getriebeeingangswelle (7) verbunden ist, wobei das Innere des Gondelkopfes und der Innenraum der Rotornabe über wenigstens einen Durchgang (10) miteinander verbunden sind,
**dadurch gekennzeichnet,**
**dass** der Durchgang (10) durch den Innenring (14) des Rotorlagers (5) hindurchgeführt ist, und somit der Innenraum der Rotornabe (2) vom Inneren (6) des Gondelkopfes aus erreicht werden kann,
**dass** der Durchgang wenigstens eine in den Innenraum (3) der Rotornabe (2) einmündende Ausgangsöffnung (14') aufweist, die vom Innenring (14) des Rotorlagers (5) ausgebildet wird,
**dass** der Durchgang wenigstens eine in das Innere (6) des Gondelkopfes einmündende Eingangsöffnung (10) aufweist, die in einem Kupplungsrad (9) angeordnet ist, welches in den Triebstrang (4) im Bereich des Innenringes (14) eingesetzt ist, dass der Durchgang derartige Abmessungen aufweist, dass er von wenigstens einer Person passierbar ist.

## Claims

1. A wind energy converter with a nacelle head having a machine support, upstream of which head is mounted a rotor hub (2) having at least one interior space, the drive line (4) of which hub is supported at the inlet to the nacelle head by at least one rotor bearing (5), with an inner ring (14) and an outer ring (15), on the machine support (1), and is connected in the interior (6) of the nacelle head to a gear input shaft (7), wherein the interior of the nacelle head and the interior space of the rotor hub are connected to each other by at least one connecting passage (10),
**characterised**
**in that** the connecting passage (10) is guided through the inner ring (14) of the rotor bearing (5), and the interior space of the rotor hub (2) can therefore be reached from the interior (6) of the nacelle head,
**in that** the connecting passage has at least one outlet orifice (14') opening into the interior space (3) of the rotor hub (2), which orifice is formed by the inner ring (14) of the rotor bearing (5).
**in that** the connecting passage has at least one inlet orifice (10) opening into the interior (6) of the nacelle head, which orifice is arranged in a coupling wheel (9) which is inserted in the drive line (4) in the region of the inner ring (14), in that the connecting passage has such dimensions that at least one person is able to pass through it.

## Revendications

1. Convertisseur d'énergie éolienne, avec une tête de gondole comportant un support de machine en amont de laquelle est monté un moyeu d'hélice (2) comportant au moins un espace intérieur, dont le faisceau d'entraînement (4) est supporté à l'entrée dans la tête de gondole par l'intermédiaire d'au moins un palier de rotor (5) avec une bague intérieure (14) et une bague extérieure (15) sur le support de la machine (1) et est relié à l'intérieur (6) de la tête de gondole avec au moins un arbre d'entrée de transmission (7), l'intérieur de la tête de gondole et l'espace intérieur du moyeu d'hélice étant reliés entre eux par au moins un passage (10),
**caractérisé en ce que**
le passage (10) traverse la bague intérieure (14) du palier de rotor (5) et de ce fait, l'espace intérieur du moyeu d'hélice (2) peut être atteint à partir de l'intérieur (6) de la tête de gondole,
**en ce que** le passage comporte au moins un orifice de sortie (14') débouchant dans l'espace intérieur (3) du moyeu d'hélice (2) qui est formé par la bague intérieure (14) du palier de rotor (5),
**en ce que** le passage comporte au moins un orifice d'entrée (10) débouchant à l'intérieur (6) de la tête de gondole, qui est disposé dans une roue d'accouplement (9) qui est intégrée dans le faisceau de transmission (4) dans la zone de la bague intérieure (14), **en ce que** le passage présente des dimensions telles qu'au moins une personne puisse le traverser.
